# EUROPEAN PATENT APPLICATION

(11) **EP 2 116 696 A1**
(43) Date of publication of application: **11.11.2009**
(21) Application number: 08008608.5
(22) Date of filing: 07.05.2008
(51) Int. Cl.: F01D 25/00, B08B 9/00

(54) **Method for cleaning a component of a turbocharger under operating conditions and turbine of a turbocharger**

(71) Applicant: Napier Turbochargers Limited, Lincoln Lincolnshire LN5 7FD (GB)
(72) Inventor: Kay, Peter, LN05 0TP Navenby, Lincoln (GB)
(74) Representative: Gill, Stephen Charles

(57) **Abstract**

A method for cleaning at least one component of a turbocharger under operation conditions is provided, comprising the steps of: increasing the pressure of a cleaning fluid, supplying the cleaning fluid to at least on injector (14), and spraying the cleaning fluid through the injector (14) onto the component. Moreover, a turbine (11) of a turbocharger is disclosed, comprising a casing (3) and at least one cleaning fluid injector (14). It further comprises a cleaning fluid reservoir (22) which is in thermal connection with the casing (3) such that heat flow between the cleaning fluid reservoir (22) and the casing (3) is possible. The cleaning fluid reservoir (22) comprises a fluid inlet (24) with a non-return valve (25) connectable to a cleaning fluid supply and a fluid outlet (29) with a relief valve (30). The cleaning fluid reservoir (22) is further in flow connection with the injector (14) via the fluid outlet (29).

## Description

The present invention relates to a method for cleaning a component of a turbocharger under operation conditions, a turbine and a turbocharger.

Industrial diesel engines use a variety of fuels, including heavy fuel oil. Such lower grade fuels have many impurities which lead to the formation of ash and other compounds. Some of these are transported from the diesel engine exhaust manifold to the turbocharger turbine and may form a thick hard deposit on the turbine blades. Such deposits cause a reduction in turbocharger efficiency, a reduction in flow capacity of the turbine, and an increase in the engine combustion temperatures. If this build-up is allowed to grow unchecked, the engine power capacity will reduce and damage to hot engine components may ensue. Damage can also occur to the turbocharger components.

To avoid the build-up of deposits, turbocharger turbines are fitted with a cleaning device. This can use solid particles, such as walnut shell fragments, rice or corn husks, as a cleaning medium. In this case the cleaning mechanism uses the impact of the medium on the ashy deposit to dislodge the deposit. Such a "dry washing" device can be effective, but the actual cleaning medium is hard to control worldwide since, for instance, walnut shells may not be available in many countries. Moreover, the size of rice grains may determine how much rice is used and for how long. Also the cleaning medium generally causes some damage of the turbine blades themselves, so turbocharger components have to be changed regularly.

'Washing' systems used to clean dirty components within the turbocharger use either 'wet' or 'dry' cleaning media injected into the air/gas flow as the engine and turbocharger is operated at low engine load. This cleans the components by a mixture of thermal shock, abrasion and chemical action. 'Washing' takes place at low engine load at regular intervals. Where, for example on a marine ferry regular periods where the engines are operated at low load this is not of concern, where however the engines are operated solely at high load, for example power generation duties, any time off full load represents costly downtime. There is thus a strong operator desire to 'wash' at as high an engine load as possible.

The main cleaning medium used in the industry is water. This is generally available at all staffed sites, is easy to specify and to control. The mechanism by which water cleans the hard ashy deposit is not entirely clear, however it is viewed as a combination of dissolving some of the compounds, providing an impact of water droplets to dislodge ashy particles and cracking the deposit by providing a thermal shock.

The method of use of water as a cleaning medium is well-known in the industry. For instance, in US 5,944,483 and US 5,938,402 methods and devices for cleaning of the nozzle ring of a turbocharger turbine are disclosed. In US 5,938,402 the cleaning device includes only one nozzle for injecting a cleaning agent into the exhaust gas flow. In US 5,944,483 a method is described, wherein a cleaning cycle is activated which runs automatically. In the cleaning cycle the water is briefly injected repeatedly into the region upstream of the nozzle ring and an injection pause for reheating the nozzle ring is maintained between the injection operations. The design of the used gas-inlet casing enables the water to be injected into the region directly upstream of the nozzle ring.

Pertaining particularly to 'water washing', it is recognised that the effectiveness of the wash is in direct relation to the coverage of the water. Given that the inlet pressure of the washing liquid has to be greater than the exhaust gas pressure in the casing, and that to minimise the number of water wash injection nozzle positions the flow of water has thus to be sprayed across the flow of the gas. Thus it is also a general rule that the higher the water inlet injection pressure, the greater the coverage can be obtained for any given number of nozzle positions. In reality the maximum water wash pressure is limited to the available water supply. Engine operators rarely have available fresh water supplies above a pressure of 5 bar. This then effectively limits the type, number, and position of injector positions used.

To prevent the used water wash nozzles from being clogged up with engine exhaust contaminants, operators often bleed air through them when not in use.

Engine operators thus have to tailor the washing regime to make best use of the conditions present, i.e. the type and quality of fuel burned, the operation cycle of the engine, the supply of washing media available, and in the case of water its supply pressure.

Engine operators have to undertake turbocharger 'washing' procedures to maintain optimum turbocharger performance. Washing has to be undertaken at part engine load, this results in a loss of engine availability. Engine operators often have to install costly high pressure water washing equipment and air purge systems which also have a continuous operational cost.

It is therefore a first objective of the present invention to provide a method for cleaning a component of a turbocharger under operation conditions. It is a second objective to provide an advantageous turbine. A third objective of the present invention is to provide an advantageous turbocharger.

The first objective is solved by a method for cleaning at least one component of a turbocharger under operation conditions as claimed in claim 1. The second objective is solved by a turbine as claimed in claim 13. The third objective is solved by a turbocharger as claimed in claim 15. The depending claims define further developments of the invention.

The inventive method for cleaning at least one component of a turbocharger under operation conditions comprises the steps of increasing the pressure of a cleaning fluid, supplying the cleaning fluid to at least one injector, and spraying the cleaning fluid through the injector onto the component. The increased pressure of the cleaning fluid which subsequently causes an increased pressure in the injector causes an increase in the coverage of the component with the cleaning fluid. This improves the effectiveness of the cleaning process.

Advantageously the pressure of the cleaning fluid may be increased by heating the fluid. The cleaning fluid may be filled into a reservoir before increasing the pressure of the cleaning fluid. The pressure of the cleaning fluid can be increased by heating it at a constant volume. Heating the cleaning fluid, especially at a constant volume of a reservoir, provides a very simple and effective means for increasing the pressure of the cleaning fluid.

Advantageously a liquid, preferably water, may be used as cleaning fluid. The water may additionally comprise a chemical agent. Using water is advantageous because it is easily available.

The cleaning fluid can be heated by means of heat transfer from a component of the turbocharger, especially from a turbocharger turbine. Advantageously, the cleaning fluid can be heated by means of heat transfer from a turbocharger outlet casing, preferably from a turbocharger turbine outlet casing. These components anyway get hot under operation conditions so that the 'waste' heat from them is used to increase the pressure of the cleaning fluid.

The pressure of the cleaning fluid, especially the pressure of the water, may be increased to a value above 5 bar. Preferably, the pressure of the cleaning fluid, for example of the water, can be increased to a value between 10 bar and 12 bar, preferably to 11 bar. The cleaning fluid may be supplied to the injector with a pressure between 6 bar and 8 bar, preferably 7 bar. The pressure of the cleaning fluid at the injector may typically be lower than the maximum pressure of the cleaning fluid after increasing its pressure because of pressure losses across the connecting pipe. If water is used as cleaning fluid, an increase of the pressure from 5 bar, as the water pressure coming from a water supply for example is, to 7 bar at the injector gives a very significant increase in wetted components. The previously given values are used as examples and are based on typical turbocharger operating conditions and physical proportions. The example values used are based on the physical limitations of a current turbocharger arrangement.

The maximum pressure generated by the device, and hence pressure available at the injectors, is dependent upon the temperature of the heat source. If a higher temperature heat source is available then higher injection pressures are possible.

Also the thermal attributes of the used heat source are important. Given an increase in thermal input to the device, the cycle times of operation may be reduced for any given volume and pressure. Alternatively, increased cycle times may be reduced in favour of increasing inject pressure for any given volume of the reservoir. There is thus a balance to be made in obtaining optimum washing from any given configuration.

The inventive method may preferably comprise the steps of a) filling the cleaning fluid into a reservoir via a non-return valve, b) closing the non-return valve, c) increasing the pressure of the cleaning fluid by increasing the temperature of the cleaning fluid in the reservoir, d) opening a relief valve for supplying the cleaning fluid to at least one injector, e) closing the relief valve, and f) opening the non-return valve. The steps a) to f) may preferably be repeated after finishing step f).

The inventive method provides an effective method for cleaning turbocharger components under operation conditions, especially at higher temperatures. The method offers more coverage at any given turbo operating point, being able to wash at high gas pressures, which means at higher engine load. The inventive method can further be applied at any time because it does not depend on the engine load.

The inventive turbine comprises a casing and at least one cleaning fluid injector. It further comprises a cleaning fluid reservoir which is in thermal connection with the casing such that heat flow between the cleaning fluid reservoir and the outlet portion of the casing is possible. The cleaning fluid reservoir comprises a fluid inlet with a non-return valve and a fluid outlet with a relief valve. The non-return valve is connectable to a cleaning fluid supply. The cleaning fluid reservoir is further in flow connection with the injector via a fluid outlet. The inventive turbine can be used to apply the inventive method. Therefore, it has the same advantages as the inventive method has.

The cleaning fluid reservoir can advantageously be located near or at an exhaust outlet of the turbine, where the turbine casing typically becomes hot. For example, the fluid reservoir can be bolted to the turbochargers turbine exit casing at a position where it uses heat energy that would otherwise be lost to the turbocharger system, thus increasing thermal efficiency. If the cleaning fluid reservoir is bolted to the turbocharger turbine inlet duct it would marginally reduce the thermal efficiency of the system, but result in the ability to produce higher injector pressures. Nevertheless, in an engine room environment there are various possible locations for the fluid reservoir. It may be bolted to part of the turbocharger, because the proximity to the injector location positions reduces heat losses and costs.

The fluid reservoir may also be an integral part of the turbochargers turbine casing. This would dramatically increase the thermal input possible to the reservoir, and could also be used advantageously to reduce the need for thermal lagging in reducing the turbochargers 'skin' temperature.

Preferably the non-return valve opens at a pressure below 5 bar and/or the relief valve opens at a pressure between 10 bar and 12 bar and shuts at a pressure between 4 bar and 5 bar. Preferably the relief valve opens at a pressure of 11 bar and shuts at a pressure of 4.5 bar. The relief valve can comprise at least one blowdown adjustment ring.

The non-return valve and/or the relief valve may automatically open and close. They can also be activated by means of a control unit.

The inventive turbine, especially as far as the inventive method is applied, may be mechanically self governing. Alternatively it may be electronically controlled, for example using standard commercially available pressure sensors and solenoid valves. Moreover, its operation can be linked into the engines electronic management system that can automatically detect when washing was required as well as controlling the process. Electronic control can also enable further refinements of the operating cycle. For example, the fixed mechanical arrangement can determine the pressure ratio between opening and closing of various valves. Electronic operation can allow greater flexibility and range in all operating points. In particular, allowing the use of very low water inlet pressures to generate high injector pressure, this would be of significant 'washing' and user benefit.

The inventive turbocharger comprises an inventive turbine as previously described. Generally, the inventive turbocharger has the same advantages as the inventive turbine has. The turbocharger turbine outlet casings typically have large flanged ports that may be used for attaching wastegate piping. To allow for different engine configurations these ports may be positioned on either side of the casing, but only one port is ever used leaving the other blanked off. This blanked off port is the ideal place to locate a water wash steam generator. Of course, the used cleaning fluid could be heated on any suitable hot surface near the turbocharger.

Generally the invention provides a means of converting low pressure cleaning fluid into a high pressure cleaning fluid. For example, water at low pressure is heated in a contained volume, using the 'waste' heat from the turbocharger turbine outlet casing. When the pressure, for example in a reservoir, causes a relief valve to open, steam and/or water may be released through pipework to clean the turbocharger components.

Further features, properties and advantages of the present invention will become clear from the following description of an embodiment in conjunction with the accompanying drawings. The described features are advantageous alone and in combination with each other.

Fig. 1 schematically shows a turbocharger in a sectional view.

Fig. 2 schematically shows part of an inventive turbine in a sectional view.

Fig. 3 schematically shows a turbine casing of a turbocharger in a perspective view.

Fig. 4 schematically shows a water reservoir with a relief valve in a sectional view.

Fig. 5 schematically shows a water reservoir with a relief valve in a sectional view.

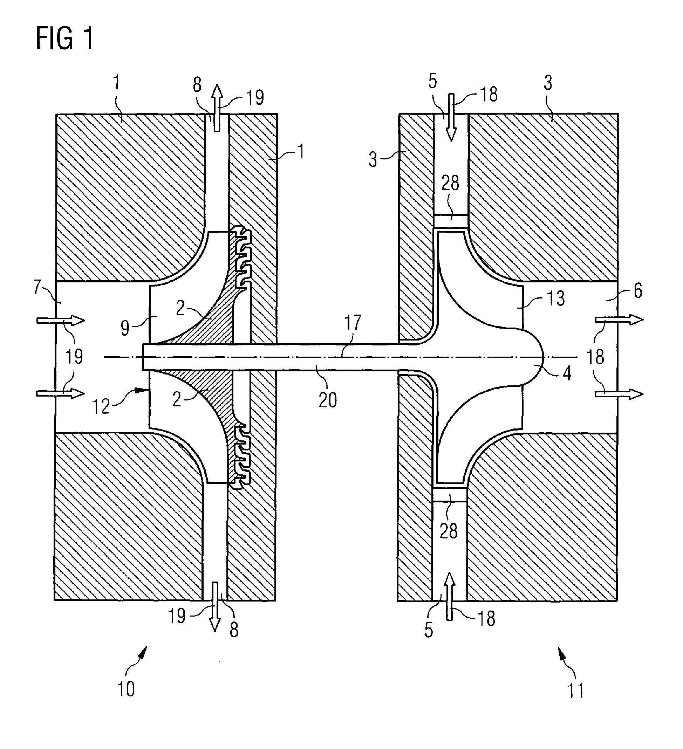

An embodiment of the present invention will now be described with reference to figures 1 to 5.

Figure 1 schematically shows a turbocharger in a sectional view. The turbocharger comprises a turbine 11 and a compressor 10. The turbine 11 and the compressor 10 are connected by a shaft 20.

The turbine 11 includes a rotor 4 which is located inside a turbine casing 3. The turbine casing 3 has an exhaust inlet 5 which leads to the rotor 4 so that the exhaust entering the exhaust inlet 5 activates the rotor 4. Turbine stator blades 28 are located near the exhaust inlet 5. Further the turbine casing 3 has an exhaust outlet 6 through which the exhaust coming from the rotor 4 leaves the turbine casing 3. The arrows 18 indicate the exhaust stream entering the turbine casing 3 through the exhaust inlet 5, activating the rotor 4 and leaving the turbine casing 3 through the exhaust outlet 6.

The compressor 10 includes an impeller 12 which is located inside a compressor casing 1. Moreover, the compressor 10 has an air inlet 7 which air leads to the impeller 12 and an air outlet 8 through which the air coming from the impeller 12 leaves the compressor casing 1. The arrows 19 indicate the air stream entering the compressor casing 1 through the air inlet 7, being compressed by the impeller 12 and leaving the compressor casing 1 through the air outlet 8.

The impeller 12 comprises a hub 2 and vanes 9. The hub 2 is connected to the shaft 20. Further, the hub 2 is generally conical in shape and a plurality of circumferentially spaced arcuate vanes 9 are formed about its periphery.

The rotor 4 of the turbine 11, which comprises a number of turbine rotor blades 13 and a number of turbine stator blades 28, is connected to the shaft 20 so that the activated rotor 4 activates the shaft 20. The shaft 20 is further connected to the impeller 12 inside the compressor 10. Hence, the rotor 4 activates the impeller 12 by means of the shaft 20. The rotation axis of the rotor 4 is indicated by reference numeral 17.

In operation of the turbine 11 the exhaust stream 18 entering the exhaust inlet 5 activates the rotor 4 and leaves the turbine through the exhaust outlet 6. The arrows 18 indicate the direction of the exhaust stream. Meanwhile, the impeller 12 in the compressor 10 driven by the rotor 4 sucks atmospherically fresh air into the air inlet 7 and compresses it to precompressed fresh air, which enters the air outlet 8. The compressed air is then used for example in a reciprocating engine like e.g. a diesel engine. The arrows 19 indicate the air stream direction.

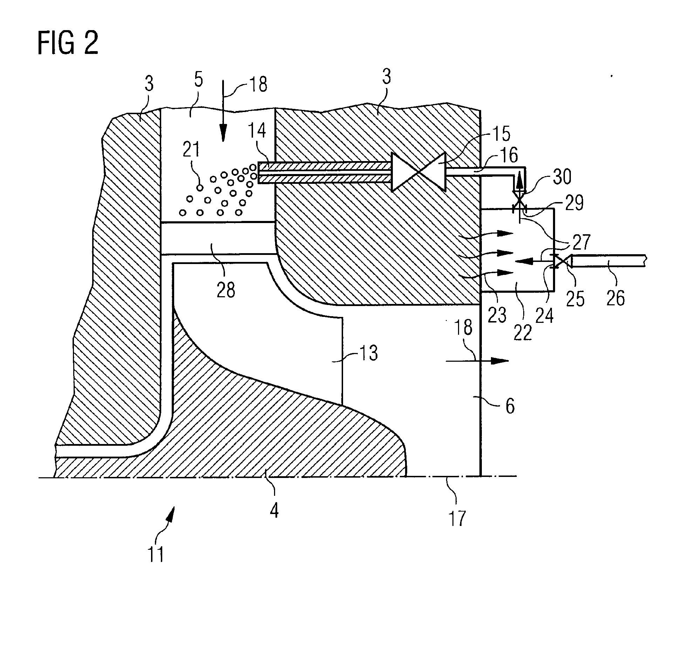

Figure 2 schematically shows part of an inventive turbine 11 in a sectional view. In Figure 1 and 2 a radial turbine is shown, because the exhaust stream 18 enters the turbine in radial direction with respect to the rotation axis 17. Instead of a radial turbine also an axial turbine can be used, where the exhaust stream enters the turbine in axial direction with respect to the rotation axis. Regarding the construction of an axial turbine it is referred to US 5,944,483, where an example for an axial turbine is described.

The inventive turbine 11, which is shown in Figure 2, comprises a number of nozzles 14 which act as injectors for a cleaning fluid. The nozzles 14 are located inside the turbine casing 3 and which protrude into the exhaust inlet 5. Instead of protruding into the exhaust inlet 5 the nozzles 14 can flush with the inner surface of the exhaust inlet 5. The nozzles 14 are located close to the turbine stator blades 28 in upstream direction. Each nozzle 14 is connected to a flow channel 16 via a valve 15.

A cleaning fluid is led through the flow channel 16 to the nozzles 14 where it is sprayed into the exhaust inlet. The cleaning fluid can be sprayed into the exhaust inlet 5 in the direction of the exhaust stream 18 or perpendicular to the direction of the exhaust stream 18. The cleaning fluid, which is sprayed into the exhaust inlet 5, impinges mainly on the turbine stator blades 28 but also on the turbine rotor blades 13 and cleans the blades 13, 28, in particular the stator blades 28.

The cleaning fluid can, for example, be water 21, as in the present embodiment, or any other suitable cleaning liquid. Moreover, a chemical cleaning agent can be added to the cleaning fluid to aid cleaning the turbine blades 13.

The flow channel 16 is connected to the outlet 29 of a water reservoir 22 via a relief valve 30. The water reservoir 22 further comprises an inlet 24 which is equipped with a non-return valve 25. Water coming from a water supply can flow through a water pipe 26, which is connected to the inlet 24 via the non-return valve 25 into the reservoir 22. The flow direction of the water is indicated by arrows 27. The water reservoir is connected to the turbine casing 3, preferably near the exhaust outlet 6, such that heat flow between the turbine casing 3 and the water reservoir 22 is possible. The heat flow is indicated by arrows 23.

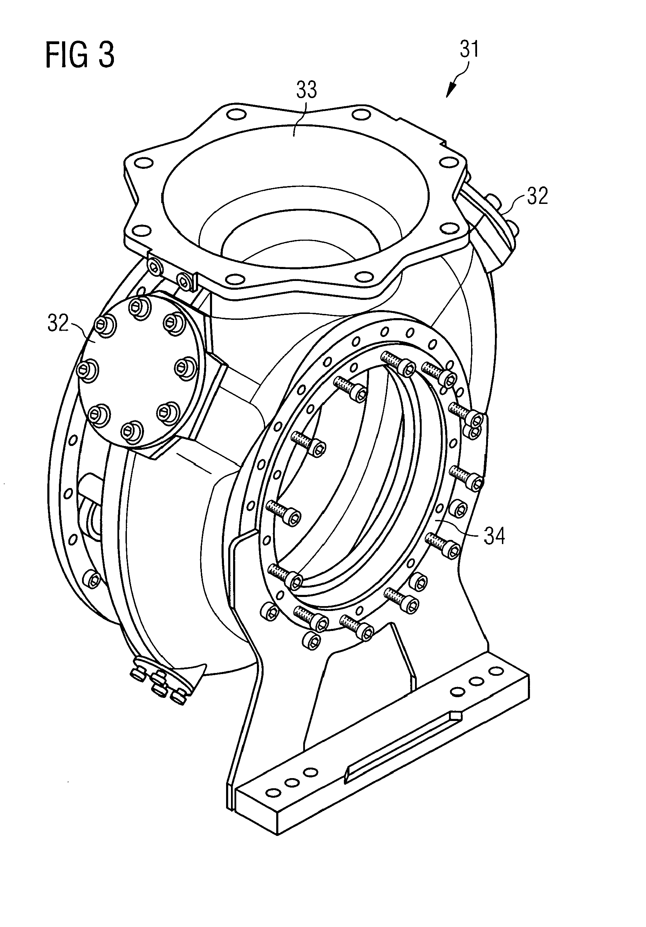

Figure 3 schematically shows a casing 31 of a turbocharger in a perspective view. The casing 31 comprises two main ports 33, 34 which may act as exhaust inlet and exhaust outlet. The casing 31 further comprises two flanged ports 32. These ports 32 can be used as mounting bases of the water reservoir 22.

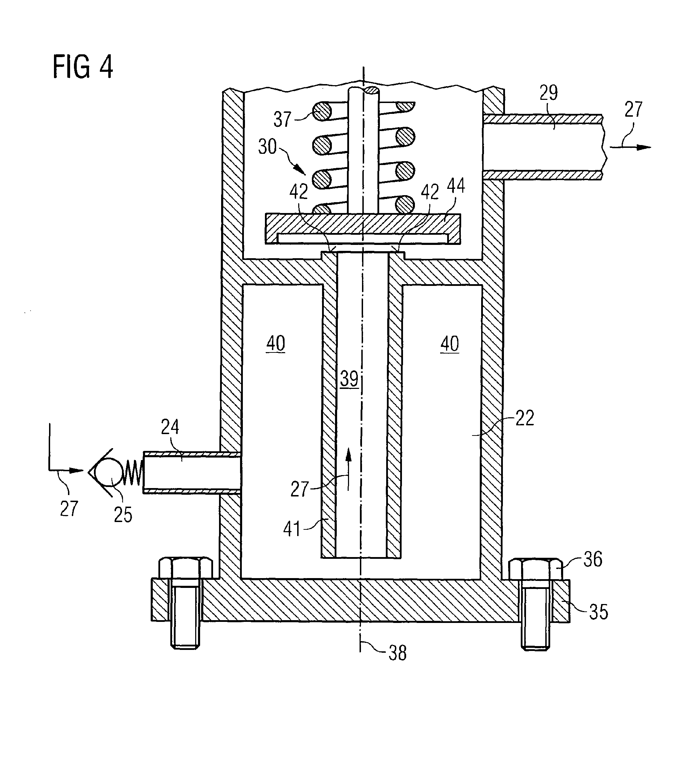

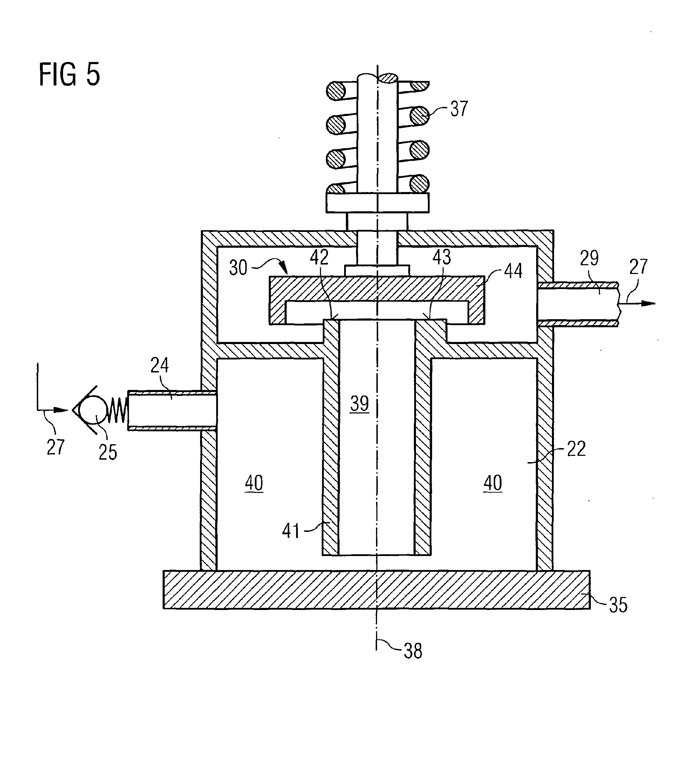

Figures 4 and 5 schematically show two different variants of a water reservoir 22 with a relief valve 30 in a sectional view. The water reservoir 22 comprises a flange 35 by which it is mounted to the turbine casing 3, for example at a position of a flanged port 32, as it is shown in figure 3. The water reservoir 22 can especially be bolted to a port 32 by means of screws 36.

The water reservoir 22 comprises a centreline 38. It further comprises an inner portion 39, which is located near the centreline 38, and an outer portion 40 which is partly separated from the inner portion 39 by means of a partition wall 41. The inner portion 39 and the outer portion 40 are in flow connection with each other.

The water reservoir 22 comprises an inlet 24 with a non-return valve 25 through which water can flow into the outer portion 40 and then into the inner portion 39 of the water reservoir 22. The water reservoir 22 further comprises a relief valve 30 which can open and close the inner portion 39. A spring 37 presses a seal element 44 of the relief valve 30 against contact surfaces 42, 43 of the inner portion 39 of the water reservoir 22.

After passing the relief valve 30 the water can flow through the outlet 29 of the water reservoir 22 to the nozzle 14. The flow direction of the water is indicated by arrows 27.

The two variants of relief valves 30 which are shown in figure 4 and figure 5 differ from each other regarding the size of the contact surfaces 42, 43. In figure 5 the contact surface 43 has a larger contact area than the contact surfaces 42 in figures 4 and 5. The size of the contact surfaces 42, 43 has an influence on the pressure at which the relief valve 30 opens. Moreover, the opening pressure of the relief valve 30 can be regulated by means of blowdown adjustment rings.

Now the inventive method will be described in more detail. Water, or any other suitable cleaning fluid, is fed into the water reservoir 22 via the non-return valve 25. The water coming from a water supply has a pressure of approximately 5 bar. It is now assumed that a pressure loss of 0.5 bar takes place across the non-return valve 25 and the water pipe 26 between the water supply and the water reservoir 22. Then the non-return valve is closed.

The water in the water reservoir 22 gets heated by heat transfer from the turbine casing 3. This causes the pressure in the water reservoir 22 to rise until the relief valve 30 operates. The turbocharger's turbine outlet casing 3 will have a temperature of approximately 260°C at low load and 360°C at full load. The relief valve 30 is set to open at 11 bar, where the saturation temperature is 184°C.

Preferably the outlet 29 from the water reservoir to the relief valve 30 is located at the bottom of the water reservoir so that any water is forced out first by the pressure of the expandable steam above it, thus not quickly losing pressure in the hot water reservoir 22 by letting the compressible steam escape first.

The relief valve 30 can be a standard relief valve, which is designed to open quickly to their maximum opening and which can be designed to remain open well below their 'cracking' pressure with the use of 'shrouds' or 'blowdown rings'. Preferably the relief valve 30 opens at 11 bar and shuts at 4.5 bar. The steam/water mixture coming from the relief valve 30 is then delivered to the water wash injectors, which are nozzles 14 in the present embodiment. The relief valve 30 is sized to ensure that it does not close before the pressure in the water reservoir 22 is beneath the water inlet pressure.

As the relief valve 30 closes at beneath the water's inlet pressure, water is allowed to flow in the water reservoir 22 through the non-return valve 25. This cools the contents of the water reservoir 22 and quickly reduces the remaining steam's pressure letting more water in until the pressure in the water reservoir 22 is identical to the incoming water when the non-return valve 25 closes, thus recharging the sequence for a repeat performance. It may be necessary to control the inlet flow rate as it is seen that to fill the water reservoir 22 completely with water will not allow very much steam to be made before the relief valve 30 is made to open. For example, an inlet flow rate such that 50% of the volume is water when the pressures equalize can be allowed.

Taking into account a pressure loss between the relief valve 30 and the nozzles 14, water with a pressure of approximately 7 bar is then supplied to the nozzles 14. Even this modest improvement in injector pressure, from 5 bar to 7 bar in the present embodiment, gives a very significant increase in wetted components.

The device as previously described is mechanically self governing, but other options for operating are also possible. If it were electronically controlled using standard commercially available pressure sensors and solenoid valves, for example, its operation could be linked into the engines electronic management system that could automatically detect when washing was required as well as controlling the process. Electronic control would also enable further refinements of the operating cycle. For example, the fixed mechanical arrangement can determine the pressure ratio between opening and closing of various valves. Electronic operation would allow greater flexibility and range in all operating points. In particular, allowing the use of very low water inlet pressures to generate high injector pressure, this would be of significant 'washing' and user benefit.

## Claims

1. A method for cleaning at least one component of a turbocharger under operation conditions comprising the steps of:
- increasing the pressure of a cleaning fluid,
- supplying the cleaning fluid to at least on injector (14), and
- spraying the cleaning fluid through the injector (14) onto the component.

2. The method as claimed in claim 1,
wherein the pressure of the cleaning fluid is increased by heating the fluid.

3. The method as claimed in claim 1 or 2,
wherein the cleaning fluid is filled into a reservoir (22) before increasing the pressure of the cleaning fluid.

4. The method as claimed in claim 3,
wherein the pressure of the cleaning fluid is increased by heating it at a constant volume.

5. The method as claimed in any of the claims 1 to 4,
wherein a liquid is used as cleaning fluid.

6. The method as claimed in any of the claims 2 to 5,
wherein the cleaning fluid is heated by means of heat transfer from a component of the turbocharger.

7. The method as claimed in claim 6,
wherein the cleaning fluid is heated by means of heat transfer from a turbocharger outlet casing (3).

8. The method as claimed in any of the claims 1 to 7,
wherein the pressure of the cleaning fluid is increased to a value above 5 bar.

9. The method as claimed in claim 8,
wherein the pressure of the cleaning fluid is increased to a value between 10 bar and 12 bar.

10. The method as claimed in any of the claims 1 to 9,
wherein the cleaning fluid is supplied to the injector (14) with a pressure between 6 bar and 8 bar.

11. The method as claimed in any of the claims 1 to 10,
wherein
a) the cleaning fluid is filled into a reservoir (22) via a non-return valve (25),
b) the non-return valve (25) is closed,
c) the pressure of the cleaning fluid is increased by increasing the temperature of the cleaning fluid in the reservoir (22),
d) a relief valve (30) is opened for supplying the cleaning fluid to at least on injector (14),
e) the relief valve (30) is closed, and
f) the non-return valve (25) is opened.

12. The method as claimed in claim 11,
wherein the steps a) to f) are repeated after finishing step f).

13. A turbine (11) comprising a casing (3) and at least one cleaning fluid injector (14),
**characterised in that**
it further comprises a cleaning fluid reservoir (22) which is in thermal connection with the casing (3) such that heat flow between the cleaning fluid reservoir (22) and the casing (3) is possible, the cleaning fluid reservoir (22) comprises a fluid inlet (24) with a non-return valve (25) connectable to a cleaning fluid supply and a fluid outlet (29) with a relief valve (30), the cleaning fluid reservoir (22) is further in flow connection with the injector (14) via the fluid outlet (29).

14. The turbine (11) as claimed in claim 13,
**characterised in that**
the non-return valve (25) opens at a pressure below 5 bar and/or the relief valve opens (30) at a pressure between 10 bar and 12 bar and shuts at a pressure between 4 bar and 5 bar.

15. A turbocharger comprising a turbine (11) as claimed in claim 13 or 14.
